# EUROPEAN PATENT APPLICATION

(11) **EP 1 982 669 A1**
(43) Date of publication of application: **22.10.2008**
(21) Application number: 08425194.1
(22) Date of filing: 26.03.2008
(51) Int. Cl.: A61C 7/28

(54) **Device for connecting orthodontic wire or arch with orthodontic brackets**

(30) Priority: 20.04.2007 IT RM20070232
(71) Applicant: Orthodontic Manufacturer SIA s.r.l., 81050 Rocca d'Evandro (CE) (IT)
(72) Inventor: Antignano, Giuseppe, 81050 Rocca D'Evandro (CE) (IT); Fionda, Giuseppe, 81050 Rocca D'Evandro (CE) (IT)
(74) Representative: Iannone, Carlo Luigi

(57) **Abstract**

The present invention relates to a device for connecting orthodontic wire or arch to orthodontic brackets, said orthodontic brackets providing two pairs of tie wing elements, spaced each other by at least a space, and a slot, for housing said orthodontic wire or arch, said device providing a covering element having such a shape and dimensions to couple externally with said bracket, with at least two of the tie wings of said two pairs of tie wings elements, and being provided with at least a pin that, when coupled with said orthodontic bracket, enters within said at least a space preventing sliding of device along the axis parallel to the orthodontic wire or arch.

## Description

The present invention relates to a device for connecting orthodontic wire or arch with orthodontic brackets.

More specifically, the invention concerns a device of the above kind that can be applied in a very easy way and permitting obtaining an optimum coupling of orthodontic wire, always maintaining pleasant aesthetic features.

As it is well known, number of patients subjecting themselves to an orthodontia treatment increased exponentially. Treatment is applied both to children or pre-adolescence or adolescence aged boys and girls, and to adults.

Generally speaking, an orthodontic implant is comprised of brackets comprised of metallic or ceramic materials or of composite materials, that, once fixed to the outer face of the teeth are hooked by wires, elastics, springs and extra mouth tractions, so as to bring teeth and dental arch into proper aesthetic and functional positions. Implant is assembled directly within the patient mouth and, by subsequent treatment steps, it is reached the desired final result. Thus, teeth can be noticeably displaced according to each direction and by every kind of movement, permitting reaching very satisfying results.

Usually, orthodontic bracket provides a base with a treatment permitting to the same base to adhere on the tooth, and a body, in which slots are realised, usually slots with a rectangular cross section, for insertion of metallic wires or arches, and tie wings for keeping ligature necessary to blocking said wires.

Metallic wire is inserted within the slot. Said wire or arch can be comprised of stainless or of special alloys, such as nickel-titanium alloy.

Its function is that of moving teeth, aligning them to their shape or arch, or in order to maintain them into an anchoring unit.

As already said, orthodontic wires or arches are inserted within the slot of the bracket.

In order to keep the metallic wire within the bracket slot, different solutions have been suggested, generally providing metallic or elastic ligature.

Traditional solutions for fixing orthodontic arch of wire to the bracket compress orthodontic arch or wire within the bracket slot, thus increasing friction and thus residual forces that are not positive for the final effect.

In this context it is included the solution suggested according to the present invention aiming to solve the above-mentioned problems of the known solutions.

It is therefore specific object of the present invention a device for connecting orthodontic wire or arch with orthodontic brackets, said orthodontic brackets providing two pairs of tie wing elements, spaced each other by at least a space, and a slot, for housing said orthodontic wire or arch, said device providing a covering element having such a shape and dimensions to couple externally with said bracket, with at least two of the tie wings of said two pairs of tie wings elements, and being provided with at least a pin that, when coupled with said orthodontic bracket, enters within said at least a space preventing sliding of device along the axis parallel to the orthodontic wire or arch.

Particularly, according to the invention, said pairs of tie wings elements can have different shape and dimensions each other.

Always according to the invention, it can be provided a plurality of spaces between said pairs of tie wings elements.

Preferably, according to the invention, said covering device provides two pins, coupling in said space between said pairs of tie wing elements.

Still according to the invention, said device is preferably comprised of resilient plastic material or of metallic material.

Always according to the invention, said device is comprised of transparent or coloured material.

The present invention will be now described, for illustrative but not limitative purposes, according to its preferred embodiments, with particular reference to the figures of the enclosed drawings, wherein:

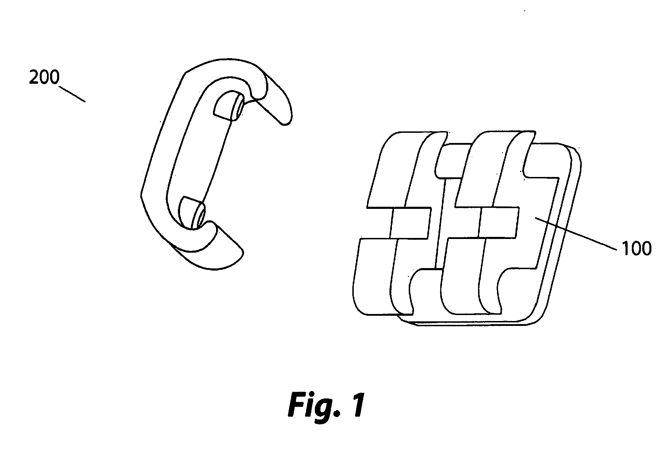

figure 1 is a first perspective exploded view of a device for connecting orthodontic wire or arch according to the invention;

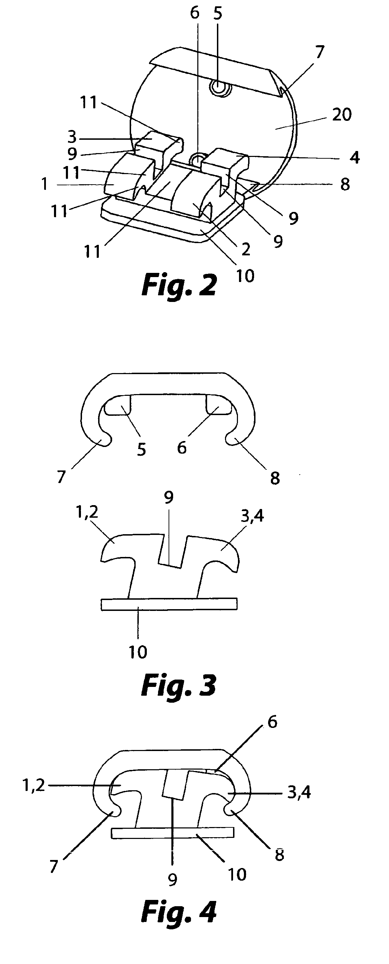

figure 2 is a second perspective view of device of figure 1;
figure 3 is a lateral view of device of figure 1;
figure 4 is a lateral view of device of figure 1 assembled;
figure 5 is a perspective view of a second orthodontic bracket or bracket;
figure 6 is a perspective view of a third orthodontic bracket or bracket;
figure 7 is a perspective view of a fourth orthodontic bracket or bracket; and

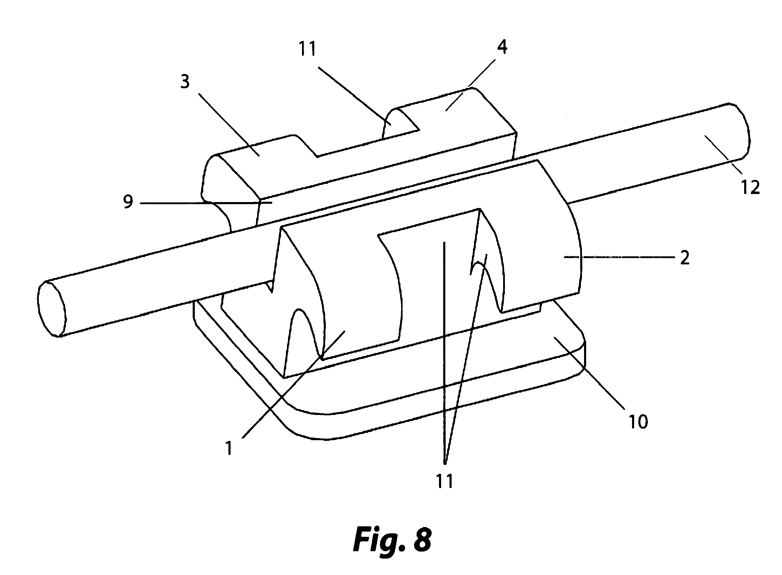

figure 8 is a perspective view of orthodontic bracket of figure 5 with the orthodontic wire applied.

Observing figures of enclosed drawings, a general orthodontic bracket or bracket 100 and a ligature device 200 according to the present invention are shown.

Orthodontic attachment or bracket 100 provides a base 10, subjected to such a treatment to permit adhesion on tooth, and a body in which slots 9 are realised, usually slots with a rectangular cross-section, for insertion of metallic wires or arches 12, and pairs of tie wings 1, 3 and 2, 4, for retaining ligature necessary to blocking said wires 12.

Metallic wire 12 is inserted within slot 9 of bracket 100. said wire or arch 12 can be comprised of stainless or of special alloys, such as nickel-titanium alloy.

One or more spaces 11 are provided between said pairs of tie wings 1, 3 and 2, 4, said spaces being realised with different or the same shape and dimensions each other.

A slot 9 is provided transversely with respect to said space 11, for receiving the orthodontic wire or arch 12.

Device 200 according to the present invention provides a covering element 20, realised with such shape and dimensions to couple outside said bracket 100 by exerting pressure on device 200 and consequent snapping action on elements 7, 8 of the same covering element 20 on at least two the tie wing elements 1, 2, 3, 4.

Said device 200 is provided with at least a pin 5 or 6 entering within said space 11, preventing sliding of the same device 200 along the axis parallel to the orthodontic wire or arch 12.

As it can be observed from the figure, preferably device 200 provides two pins 5, 6 coupling, respectively, pin 5 within the space between said tie wings 1, 2 and pin 6 between tie wings 3, 4.

Ligature device 200 is preferably comprised of resilient plastic material or of metallic material, and it can be eventually comprised of a transparent or coloured material.

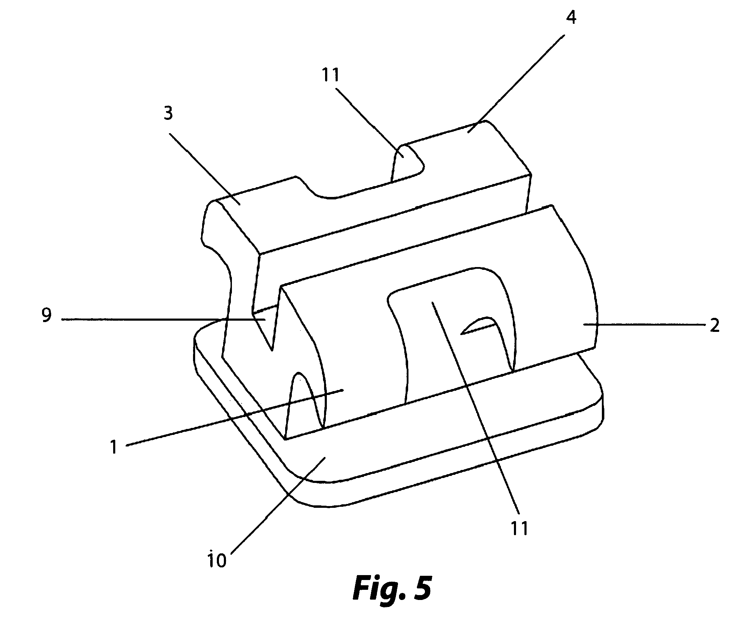

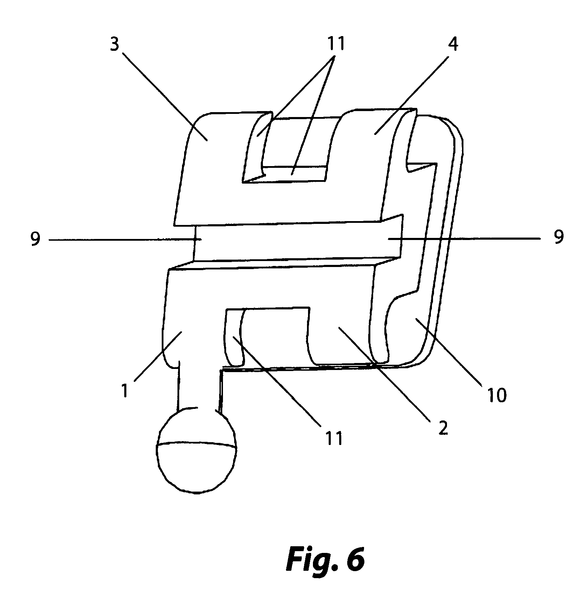

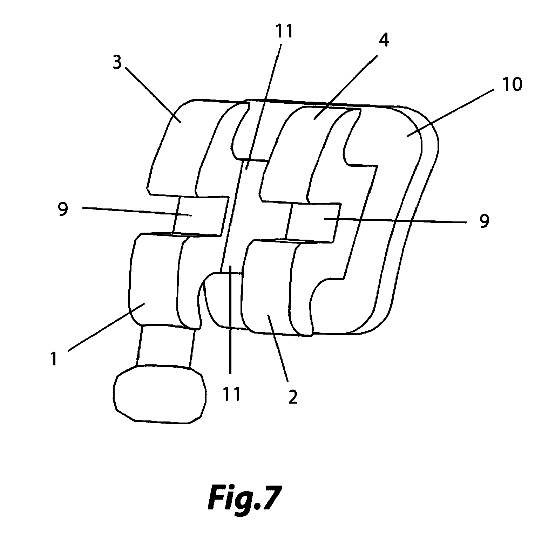

Further orthodontic brackets 100 are shown in figures 5, 6, and 7, which are examples of brackets that can be used along with device according to the invention.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Device for connecting orthodontic wire or arch with orthodontic brackets, said orthodontic brackets providing two pairs of tie wing elements, spaced each other by at least a space, and a slot, for housing said orthodontic wire or arch, said device being **characterised in that** it provides a covering element having such a shape and dimensions to couple externally with said bracket, with at least two of the tie wings of said two pairs of tie wings elements, and being provided with at least a pin that, when coupled with said orthodontic bracket, enters within said at least a space preventing sliding of device along the axis parallel to the orthodontic wire or arch.

2. Device according to claim 1, **characterised in that** said pairs of tie wings elements can have different shape and dimensions each other.

3. Device according to one of the preceding claims, **characterised in that** it is provided a plurality of spaces between said pairs of tie wings elements.

4. Device according to one of the preceding claims, **characterised in that** said covering device provides two pins, coupling in said space between said pairs of tie wing elements.

5. Device according to one of the preceding claims, **characterised in that** said device is comprised of resilient plastic material or of metallic material.

6. Device according to one of the preceding claims, **characterised in that** said device is comprised of transparent or coloured material.
